(19) Europäisches Patentamt
European Patent Office
Office européen des brevets

(11) **EP 1 374 035 B1**

(12) **EUROPÄISCHE PATENTSCHRIFT**

(45) Veröffentlichungstag und Bekanntmachung des Hinweises auf die Patenterteilung:
**26.09.2007 Patentblatt 2007/39**

(51) Int Cl.:
*G06F 7/68* *(2006.01)*      *H03K 23/68* *(2006.01)*
*H04J 3/06* *(2006.01)*

(21) Anmeldenummer: **02729772.0**

(22) Anmeldetag: **13.03.2002**

(86) Internationale Anmeldenummer:
**PCT/DE2002/000873**

(87) Internationale Veröffentlichungsnummer:
**WO 2002/075993 (26.09.2002 Gazette 2002/39)**

(54) **VERFAHREN UND VORRICHTUNG ZUR BILDUNG VON TAKTIMPULSEN IN EINEM BUSSYSTEM MIT WENIGSTENS EINEM TEILNEHMER, BUSSYSTEM UND TEILNEHMER**

METHOD AND DEVICE FOR FORMING CLOCK PULSES IN A BUS SYSTEM COMPRISING AT LEAST ONE STATION, BUS SYSTEM AND STATION

PROCEDE ET DISPOSITIF POUR LA GENERATION D'IMPULSIONS D'HORLOGE DANS UN SYSTEME A BUS COMPRENANT AU MOINS UNE STATION, SYSTEME A BUS ET STATION

(84) Benannte Vertragsstaaten:
**AT DE FR GB SE**

(30) Priorität: **15.03.2001 DE 10112907**
**28.02.2002 DE 10208649**

(43) Veröffentlichungstag der Anmeldung:
**02.01.2004 Patentblatt 2004/01**

(73) Patentinhaber: **ROBERT BOSCH GMBH**
**70442 Stuttgart (DE)**

(72) Erfinder:
• **FUEHRER, Thomas**
**70839 Gerlingen (DE)**
• **MUELLER, Bernd**
**71229 Leonberg (DE)**
• **HARTWICH, Florian**
**72762 Reutlingen (DE)**
• **HUGEL, Robert**
**76199 Karlsruhe (DE)**

(56) Entgegenhaltungen:
**EP-A- 0 280 126      GB-A- 2 239 115**
**US-A- 5 202 642      US-A- 5 267 273**
**US-A- 5 907 590**

EP 1 374 035 B1

**Beschreibung**

Stand der Technik

Die Erfindung betrifft ein Verfahren und eine Vorrichtung zur Bildung von Taktimpulsen in einem Bussystem mit wenigstens einem Teilnehmer sowie ein Bussystem und einen Teilnehmer des Bussystems gemäß den unabhängigen Ansprüchen.

Die Vernetzung von Steuergeräten, Sensorik und Aktuatorik mit Hilfe eines Kommunikationssystems, eines Bussystems, hat in den letzten Jahren beim Bau von modernen Kraftfahrzeugen oder auch im Maschinenbau, insbesondere im Werkzeugmaschinenbereich, als auch in der Automatisierung drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über einen Bus bzw. ein Bussystem statt. Der Kommunikationsverkehr auf dem Bussystem, Zugriffs- und Empfangsmechanismen sowie Fehlerbehandlung werden über ein Protokoll geregelt.

Als Protokoll im Kfz-Bereich etabliert ist der CAN (controller area network). Dies ist ein ereignisgesteuertes Protokoll, d. h. Protokollaktivitäten wie das Senden einer Nachricht werden durch Ereignisse initiiert, die ihren Ursprung außerhalb des Kommunikationssystems selbst haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel. Ein Hinzufügen weiterer Knoten und Nachrichten ist damit problemlos möglich, so lange es noch freie Prioritäten (message identifier) gibt.

Ein alternativer Ansatz zu einer solchen ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Ein solches Protokoll ist vergleichsweise unflexibel. Ein Hinzufügen von neuen Knoten ist nur dann möglich, wenn zuvor schon die entsprechenden Zeitbereiche freigelassen wurden. Dieser Umstand erzwingt, die Nachrichtenreihenfolge schon vor Inbetriebnahme festzusetzen. Es wird also ein Fahrplan erstellt, der den Anforderungen der Nachrichten bezüglich Wiederholrate, Redundanz, Deadlines usw. genügen muss. Die Positionierung der Nachrichten innerhalb der Sendeperioden muss auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung (minimale Latent-Jitter beim Senden der Nachricht am Bus) zerstört. Es werden so hohe Anforderungen an die Planungstools gestellt.

Der in den Patentanmeldungen DE 100 00 302 A1, DE 100 00 303 A1, DE 100 00 304 A1 und DE 100 00 305 A1 gezeigte Lösungsansatz des zeitgesteuerten CAN, dem sogenannten TTCAN (time triggered controller area network) genügt in den oben skizzierten Forderungen nach zeitgesteuerter Kommunikation sowie den Forderungen nach einem gewissen Maß an Flexibilität. TTCAN erfüllt dies durch den Aufbau der Kommunikationsrunde (basic cycle) in sogenannte exklusive Zeitfenster für periodische Nachrichten bestimmter Kommunikationsteilnehmer und in sogenannte arbitrierende Zeitfenster für spontane Nachrichten mehrerer Kommunikationsteilnehmer.

Neben den genannten Bussystemen ist eine Vielzahl von Bus-bzw. Kommunikationssystemen zur Verbindung von Teilnehmern in verteilten Systemen bekannt. Im weiteren wird von einem TTCAN-Netzwerk als Bussystem mit wenigstens einem Teilnehmer ausgegangen, wobei dies nicht als einschränkend bezüglich des späteren Gegenstands der Erfindung zu verstehen ist. Vielmehr ist der Gegenstand der später erläuterten Erfindung auch bei weiteren, vergleichbaren Bussystemen zur Bildung eines Taktes oder Taktimpulses bzw. einer Taktteilung einsetzbar.

Dabei muss beispielsweise in vernetzten Steuergeräten in der Automatisierung, im Kraftfahrzeug und in anderen Einsatzgebieten aus den verschiedenen internen, lokalen Takten der Teilnehmer, insbesondere der Steuergeräte, ein einheitlicher Takt für das Kommunikationsnetzwerk, also das Bussystem abgeleitet werden. Ebenso muss in den genannten vernetzten Steuergeräten aus einem über das Bussystem bzw. das Kommunikationsnetzwerk übermittelten Takt ein interner, lokaler Takt jedes Teilnehmers, beispielsweise als Arbeitstakt, ableitbar sein.

Übliche Taktteiler bieten die Möglichkeit, aus einem Eingangstakt einen langsameren Ausgangstakt abzuleiten, wobei die Taktperiode des Ausgangstaktes ein ganzzahliges Vielfaches der Taktperiode des Eingangstaktes ist.

Die US 5907590 zeigt ein vergleichbares Verfahren, auf einfache Weise einen Ausgangstakt mit gebrochenem nationalem Teilerverhältnis darzustellen. Allerdings ist in der genannten Schrift eine Weiterführung zur kaskadierten zusätzlichen Erzeugung eines zweiten Taktes nicht gezeigt.

Somit ist es Ziel der Erfindung, ein allgemeines Verfahren, eine Vorrichtung bzw. ein entsprechendes Bussystem und einen entsprechenden Teilnehmer anzugeben, wodurch mittels Taktteilung aus einem Eingangstakt zwei langsamere Ausgangstakt hergestellt werden kann, wobei die Taktperiode des Ausgangstaktes nicht nur ein ganzzahliges, sondern im Mittel auch ein gebrochen rationales Vielfaches der Taktperiode des Eingangstaktes sein kann.

Vorteile der Erfindung

Durch die Erfindung wird ein allgemeines Verfahren sowie eine Vorrichtung und ein entsprechendes Bussystem sowie ein Teilnehmer des Bussystems beschrieben, zur Bildung von Taktimpulsen eines zweiten Taktes, aus Taktimpulsen eines vorgegebenen ersten Taktes, wobei eine erste Anzahl der Taktimpulse des ersten Taktes in einem vorgebbaren Zeitintervall ermittelt oder vorgegeben wird und eine zweite Anzahl der Taktimpulse des zweiten Taktes in dem vorgegebenen Zeitintervall ermittelt oder vorgegeben wird, wobei vorteilhafter Weise ein Zwischenwert der Anzahl von Taktimpulsen in dem vorgebbaren Zeitintervall vorgegeben wird und der Zwischenwert mit einem Wert verglichen wird, welcher aus der ersten Anzahl von Taktimpulsen und der zweiten Anzahl von Taktimpulsen gebildet wird und sich aus dem Vergleich ein Wahrheitswert ergibt, wobei abhängig von dem Wahrheitswert ein Taktimpuls des zweiten Taktes erzeugt wird.

Dadurch wird erfindungsgemäß eine Taktteilung bzw. eine Bildung eines Taktes derart erzielt, dass nicht nur ein ganzzahliges, sondern im Mittel auch ein gebrochen rationales Vielfaches der Taktperiode des Eingangstaktes bzw. des ersten Taktes erzielbar ist.

In einer speziellen Ausführungsform wird vorteilhafter Weise neben dem Zwischenwert ein Teilzwischenwert vorgegeben, der mit einem vorgegebenen Teilwert verglichen wird und sich aus dem Vergleich mit dem Teilwert ein zusätzlicher Wahrheitswert ergibt, wobei aus dem Taktimpuls des zweiten Taktes abhängig von dem zusätzlichen Wahrheitswert ein Taktimpuls eines dritten Taktes erzeugbar ist.

Damit lässt sich vorteilhafter Weise die Ausgangstaktperiode, also die Taktperiode des zweiten und dritten Taktes feiner auflösen als bei den bekannten Verfahren.

Weiterhin von Vorteil ist, dass sich durch die genannten Maßnahmen eine genauere Einstellung des zu bildenden Taktes, insbesondere des Netzwerktaktes ergibt, auch wenn der Eingangstakt, insbesondere die lokalen Takte der Teilnehmer von ihren Sollwerten abweichen, beispielsweise durch Temperaturänderung oder -alterung. Gleiches gilt ebenfalls für das Beispiel einer genaueren Einstellung der lokalen Takte der Teilnehmer, insbesondere des wenigstens einen Teilnehmers aus einem Eingangstakt des Bussystem, insbesondere des Netzwerktaktes.

Zweckmäßiger Weise werden die oben genannten Verfahrensschritte abhängig von jedem Taktimpuls des ersten Taktes einmal durchlaufen.

Vorteilhafter Weise wird der Zwischenwert abhängig von dem Vergleich und damit abhängig vom Wahrheitswert unterschiedlich verändert.

Bei einer besonderen Ausführungsform ist die Erzeugung des Taktimpulses des zweiten Taktes und des dritten Taktes und die Veränderung des Zwischenwertes bzw. des Teilzwischenwertes um eine vorgebbare Anzahl an Taktimpulsen des ersten Taktes versetzt.

Zweckmäßiger Weise ergibt sich der Wert, mit dem der Zwischenwert verglichen wird, aus der Subtraktion des Produktes aus der zweiten Anzahl der Taktimpulse, also der Taktimpulse des zweiten Taktes mit einer ganzen Zahl F von der ersten Anzahl der Taktimpulse des ersten Taktes in dem vorgebbaren Zeitintervall.

Insbesondere wird in der speziellen Ausführungsform ein Taktimpuls des zweiten Taktes und des dritten Taktes dann erzeugt, wenn die Bedingung erfüllt ist, dass der oben genannte Zwischenwert größer als das vorgenannte Subtraktionsergebnis ist.

In einem speziellen Ausführungsbeispiel wird die ganze Zahl F auf Werte von $2^n$ mit $n \in \angle_0$ beschränkt, so dass die Multiplikation der Anzahl der Taktimpulse des zweiten Taktes mit der ganzen Zahl durch eine Verschiebung des binären Wertes der Anzahl der Taktimpulse des zweiten Taktes um n Bit ersetzt werden kann. Damit kommt das Verfahren ohne Multiplikation oder Division aus, welche viel Implementationsaufwand benötigen würden.

Bei Erzeugung der Taktimpulse des dritten Taktes stehen vorteilhafter Weise die Taktimpulse des zweiten Taktes nur im Teilnehmer selbst zur Verfügung, werden aber von diesem nicht ausgegeben.

Weitere Vorteile und vorteilhafte Ausgestaltungen ergeben sich aus der Beschreibung sowie den Merkmalen der Ansprüche.

Zeichnungen

Im Weiteren wird die Erfindung anhand der in der Zeichnung dargestellten Figuren näher erläutert.

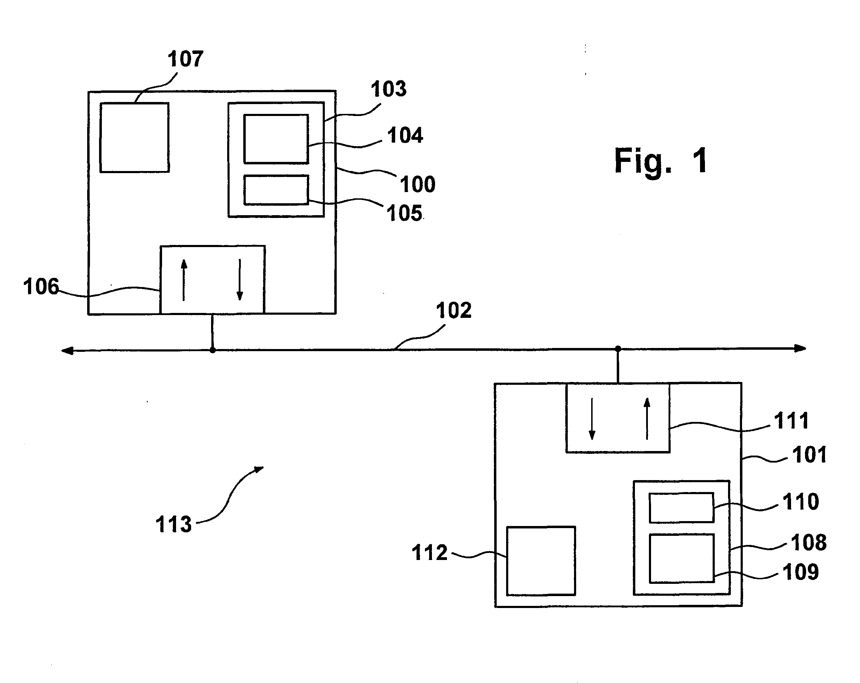

Dabei zeigt Figur 1 ein Netzwerk bzw. ein Bussystem mit wenigstens einem Teilnehmer, insbesondere ein TTCAN-Bussystem mit wenigstens einem Mittel zur Durchführung des erfindungsgemäßen Verfahrens.

Figur 2 zeigt ein Flussdiagramm zur Taktbildung, insbesondere Taktteilung, wobei die ganze Zahl F gleich 1 gewählt ist und zum Vergleich ein Zwischenwert vorgegeben wird.

Figur 3 zeigt eine Signaldarstellung der Taktimpulse zur Erläuterung der Vorgänge gemäß dem Flussdiagramm nach Figur 2.

Figur 4 zeigt ein Flussdiagramm entsprechend Figur 2, wobei zusätzlich neben dem Zwischenwert ein Teilzwischenwert vorgegeben wird und entsprechend zweite und dritte Takte aus dem ersten Takt erzeugt werden.

Figur 5 zeigt eine Signaldarstellung der Taktimpulse zur Erläuterung der Vorgänge im Flussdiagramm nach Figur 3.

Beschreibung der Ausführungsbeispiele

Figur 1 zeigt ein Bussystem 113 mit einem ersten Teilnehmer 100 und einem zweiten Teilnehmer 101, die über eine Kommunikationsverbindung 102 miteinander verbunden sind. In den Teilnehmern ist mit 103 bzw. mit 108 jeweils ein Buskontrollbaustein, ein sogenannter Buscontroller dargestellt. Die beiden Kommunikationsschnittstellen 106 und 111 als Verbindung zur Kommunikationsverbindung 102 sind hier separat dargestellt, können aber auch im Buscontroller 103 bzw. 108 untergebracht sein bzw. deren Funktionalität kann durch den Buscontroller 103 bzw. 108 übernommen werden. In den Teilnehmern 100 bzw. 101 sind Clockquellen 107 bzw. 112 dargestellt. Die Buscontroller 103 bzw. 108 enthalten den Taktteiler bzw. die Funktionalität der Taktteilung, dargestellt durch Block 104 bzw. Block 109. Je nach notwendiger Anpassung wird dabei der lokale Takt an einen gemeinsamen Takt des Bussystems 113 angepasst oder aber ein gemeinsamer Takt des Bussystems 113 übertragen über die Kommunikationsverbindung 102 an den entsprechenden Teilnehmer. Optional vorhanden ist eine lokale Zeitbasis, beispielsweise ein Zählerbaustein insbesondere beim TTCAN, welche hier mit 105 bzw. 110 dargestellt sind.

Da, wie beschrieben, beide Richtungen der Anpassung möglich sind, wird im Weiteren allgemein von einem Eingangstakt und einem Ausgangstakt bzw einem Teiltakt oder Ausgangsteiltakt die Rede sein. Insbesondere erfolgt die Anpassung des Taktes eines zur Kommunikationsverbindung externen Zeitgebers als Versorgungstakt (Quarz, voltage controlled oscillator, usw.), speziell der gegebenen Clockquelle 107 bzw. 112 an einen gemeinsamen Arbeitstakt des Bussystems, via dem Buscontroller. Dazu dient der Taktteiler, beispielsweise ein Integrated Circuit, ein IC 104 bzw. 109.

Das gewünschte Teilerverhältnis wird festgelegt durch den Quotienten der Anzahl der Eingangstakte in einem gegebenen, insbesondere großen Zeitintervall und der Anzahl der Ausgangstakte in dem selben Zeitintervall, wobei diese Zahlen E und A ganze Zahlen sind. Damit ergibt sich ein Teilerverhältnis TUR (time unit ratio) mit

$$\text{TUR} = \text{E/A} \qquad\qquad (\text{Gleichung 1})$$

TUR ist somit eine rationale Zahl. Die Länge einer einzelnen Ausgangstaktperiode ATP ist immer ein ganzzahliges Vielfaches der Länge der Eingangstaktperiode ETP, wobei gelten soll:

$$((\text{TUR} - 0,5) * \text{ETP}) < \text{ATP} < ((\text{TUR} + 0,5) * \text{ETP})$$
$$(\text{Gleichung 2})$$

Das bedeutet, dass die Länge zweier beliebiger ATPs sich um maximal eine ETP unterscheiden. Somit gilt im Mittel :

$$\text{ATP} = \text{TUR} * \text{ETP} \qquad\qquad (\text{Gleichung 3})$$

Wird die Ausgangstaktperiode ATP noch feiner unterteilt, können die einzelnen Teile der Ausgangstaktperiode ATP um eine Eingangstaktperiode ETP unterschiedlich lang sein. Für die mögliche Auflösung der Feinteilung F gilt:

$$\text{F} <= \text{TUR} \qquad\qquad (\text{Gleichung 4}),$$

wobei F eine ganze Zahl ist. Die Feinteilung F bedeutet, dass eine Ausgangstaktperiode ATP in F Teile unterteilt wird.

Die erfindungsgemäße Taktbildung, insbesondere Taktteilung beruht nun darauf, dass die Division durch A, also die time unit ratio TUR, nach Gleichung 1 so durch einen Algorithmus ersetzt wird, dass für die Bedingung

$$\text{N} * \text{A} - \text{E} = \text{R} >= 0 \qquad\qquad (\text{Gleichung 5})$$

der minimale Wert von N ermittelt werden kann. Dies ergibt somit die Länge einer Ausgangstaktperiode ATP mit N mal der Eingangstaktperiode ETP.

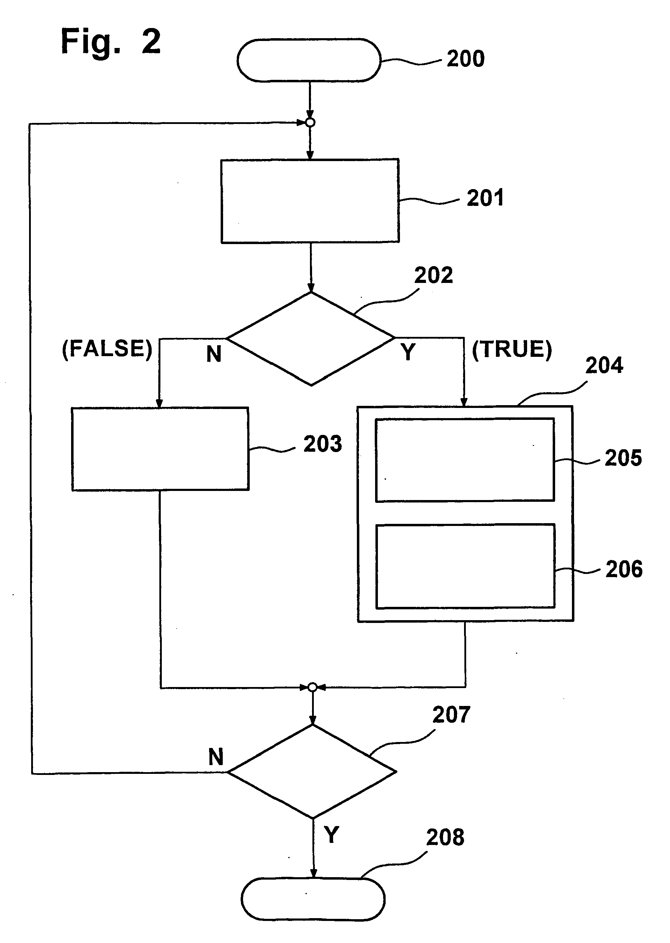

Die Reste R werden von einer Ausgangstaktperiode ATP zur nächsten aufaddiert, was zunächst in einem einfachen Verfahren nach Figur 2 dargestellt ist. Dabei sind E und A ganze Zahlen mit einem Teilerverhältnis

$$TUR = E/A >= 1 \qquad (Gleichung\ 6).$$

Der Rest R, im Weiteren als Zwischenwert bezeichnet, ist ebenfalls eine ganze Zahl und startet beispielsweise mit 0. Im Block 200 in Figur 2 ist der Verfahrensstart gezeigt. Im Block 201 werden die Eingangstaktimpulse dahingehend ausgewertet, dass zu jedem Eingangstaktimpuls der nachfolgende Prozess abläuft. In Abfrage 202 wird überprüft, ob die Zwischengröße R größer der Differenz E - A ist, ob also die Zwischengröße R größer als die Differenz der Anzahl der Eingangstakte minus der Anzahl der Ausgangstakte ist

$$(R > E - A) \qquad (Gleichung\ 7).$$

Ist dies der Fall, gelangt man zu Block 204, in dem einerseits in Block 205 ein neuer Zwischenwert R erzeugt wird bzw. der Zwischenwert R verändert wird und im Block 206 ein Taktimpuls des Ausgangstaktes AT erzeugt wird.

Der Zwischenwert R wird gemäß der Gleichung

$$R := R + A - E \qquad (Gleichung\ 8)$$

verändert. Im Block 206 wird nun ein Ausgangstaktpuls erzeugt. Es wird somit zu jedem Taktimpuls des Eingangstaktes ET ein Taktimpuls des Ausgangstaktes AT erzeugt, sofern die Bedingung nach Gleichung 7 (R > E - A) erfüllt ist. Ist diese Bedingung nicht erfüllt, gelangt man aus Block 202 in Block 203, wo ebenfalls eine Anpassung bzw. Veränderung des Zwischenwertes R erfolgt, indem

$$R := R + A \qquad (Gleichung\ 9)$$

berechnet wird. Aus Block 204 nach der Erzeugung des Taktimpulses des Ausgangstaktes AT und der Veränderung der Zwischengröße R gemäß Block 205 bzw. aus der unterschiedlichen Veränderung der Zwischengröße R im Block 203 gelangt man zu Block 207, in welchem entschieden wird, ob das Verfahren weiter durchzuführen ist oder die Taktanpassung zu beenden ist. Ist dies der Fall, gelangt man zu Block 208, dem Ende des Verfahrens, oder im anderen Fall zurück zu Block 201, wo der erneute Taktimpuls des Eingangstaktes ET ausgewertet wird. Die Abbruchbedingung nach Abfrage 207 ist dabei optional und muß nicht enthalten sein.

Erfindungsgemäß gibt es andere äquivalente Algorithmen bzw. Verfahren, bei denen eine entsprechende Taktbildung bzw. Taktteilung erzielt wird, beispielsweise dadurch, dass statt R solange um A zu erhöhen, bis eine Ausgabeimpulsbedingung erfüllt ist, der Zwischenwert R so lange erniedrigt wird, bis eine weitere Abfragebedindung erfüllt ist. Bei all diesen äquivalenten erfindungsgemäßen Algorithmen ist folgendes Schema gemeinsam:

- Es gibt in der Anwendung einen Prozess, der bei jedem Taktimpuls des Eingangstaktes ET einmal abläuft (Auswertung Block 201).

- Dieser Prozess kann einen Taktimpuls des Ausgangstaktes AT erzeugen (entsprechend Block 204 bzw. Block 206).

- Der Taktimpuls des Ausgangstaktes AT wird erzeugt, wenn der Vergleich des Zwischenwertes R mit einem aus E und A ermittelten, einfach berechenbaren festen Wert, einen bestimmten Wahrheitswert ergibt. Es ergibt sich somit im vorherigen Beispiel aus Block 202 bei Erfüllung der Bedingung R > E - A gemäß Gleichung 7 ein Wahrheitswert TRUE, der eine erste Veränderung des Zwischenwertes R gemäß Block 205 und die Iniziierung eines Taktimpulses des Ausgängstaktes AT gemäß Block 206 zur Folge hat. Bei einem zweiten Wahrheitswert FALSE, d.h. wenn die Bedingung R > E - A gemäß Gleichung 7 nicht erfüllt ist, wird der Zwischenwert R auf unterschiedliche Weise angepasst entsprechend Block 203, und kein Taktimpuls des Ausgangstaktes erzeugt.

- Somit wird, falls ein Taktimpuls des Ausgangstaktes AT erzeugt wird, mit R eine bestimmte erste Manipulation M1 vorgenommen, beispielsweise eine Addition oder Subtraktion einer aus A und E berechenbaren Größe.

- Wird kein Taktimpuls des Ausgangstaktes AT erzeugt, so wird mit R eine bestimmte andere Manipulation M2 vorgenommen, eben wie hier beispielsweise die Addition von A.

Als Variante dieses allgemeinen Verfahrensschemas kann der Schritt der Erzeugung des Taktimpulses des Ausgangstaktes und der Manipulation M1 der Zwischengröße R so zerlegt werden, dass die Ausgabe des Taktimpulses des Ausgangstaktes AT und die Manipulation M1 des Zwischenwertes R nicht gleichzeitig geschieht, sondern um eine vorgebbare Zahl, insbesondere eine feste Zahl an Taktimpulsen des Eingangstaktes ET versetzt ist.

Eine weitere optionale Variante ist, dass mit dem Zwischenwert R die bestimmte weitere Manipulation M2 immer durchgeführt wird und im vorhergehenden Schritt, also falls ein Taktimpuls des Ausgangstaktes AT erzeugt wird, nur der Unterschied bezüglich der Manipulation M1 gegenüber dieser Manipulation M2 noch zusätzlich eingestellt wird.

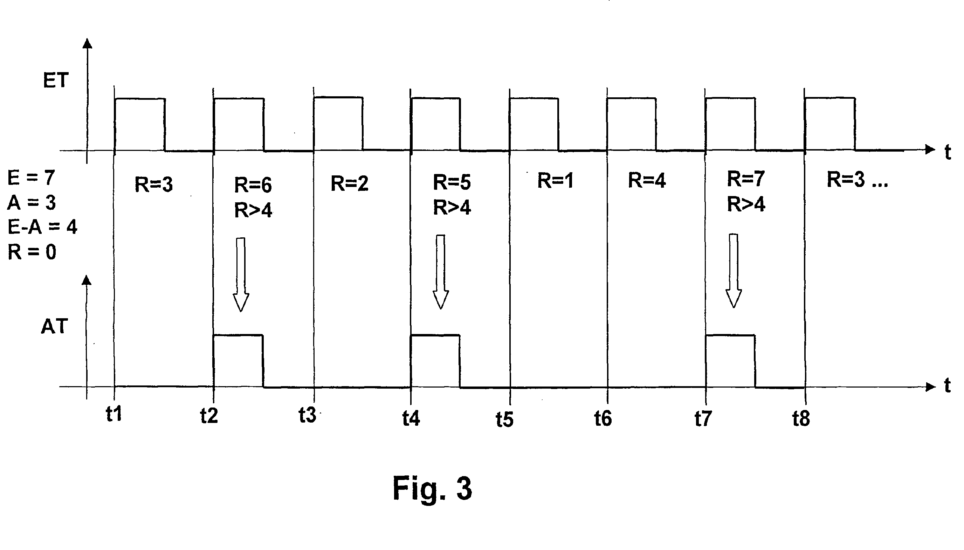

Ein konkretes Beispiel zur Veranschaulichung des eben dargestellten Verfahrens ist in Figur 3 gezeigt. Hier ist die Anzahl der Taktimpulse des Eingangstaktes ET, E mit 7 und die Anzahl der Taktimpulse des Ausgangstaktes AT, A im selben Zeitintervall mit 3 dargestellt. Somit ergibt sich eine Differenz E - A gleich 4. Wie vorher beispielhaft erwähnt, startet der Zwischenwert R insbesondere mit 0. Der erste Taktimpuls des Eingangstaktes ist nicht dargestellt, da er nur für die Startwerte Gültigkeit hat. Für diesen ersten Eingangstakt gilt also R < 4, wodurch der Wahrheitswert FALSE erzeugt wird und im Block 203 mit R := R + A = 3 der Zwischenwert R mit 3 belegt wird. Beim nächsten Taktimpuls des Eingangstaktes ET bei t1 ist also R = 3. Wiederum ist R < 4. Es wird wieder der Wahrheitswert FALSE erzeugt und im Block 203 A = 3 aufaddiert. Damit wird R = 6. Beim nächsten Taktimpuls im Zeitpunkt t2 ist also R = 6, damit R > 4, wodurch der Wahrheitswert TRUE erzeugt wird. Im Block 205 wird der neue Wert für R gebildet. Mit R := R + A - E = 2 und dem Block 206 wird dann ein Ausgangstaktimpuls erzeugt. Zum Zeitpunkt t3 ist somit R = 2, und es wird kein Ausgangstaktimpuls erzeugt. Aber in Block 203 wird durch den Wahrheitswert FALSE der neue Wert ermittelt, woraus sich R = 5 ergibt. Damit wird zum Zeitpunkt t4 für R = 5 erneut ein Taktimpuls des Ausgangstaktes AT erzeugt. Zum Zeitpunkt t5 und t6 werden über Block 203 entsprechend der Wahrheitswerte FALSE die neuen R-Werte mit R = 1 bei T5 und R = 4 bei T6 ermittelt. Der nächste Ausgangstakt wird dann für R = 7 mit der R > 4 zum Zeitpunkt t7 erzeugt. Ab t8 wiederholen sich die Verfahrensschritte ab R = 3 wie dargestellt.

In diesem Beispiel sind als Zeitpunkte t7 die aufsteigenden Flanken der Taktimpulse des Eingangstaktes gewählt. Dies ist nicht zwingend. Gleiche Resultate können für die absteigenden Flanken oder andere erkennbare Zustände der Taktimpulse des Eingangstaktes ausgeführt werden. Somit werden zum Zeitpunkt t2, t4 und t7 Taktimpulse des Ausgangstaktes erzeugt. Es kann somit ein gebrochen rationales Teilerverhältnis von hier, beispielsweise TUR = 7/3 = 2 $\frac{1}{3}$ dargestellt werden, was eben zwei bis drei Taktimpulse des Ausgangstaktes AT, bezogen auf die Eingangstaktimpulse, bedeutet.

Für den Startwert R, beispielsweise ein Registerwert, abgespeichert in einem Register in einem Teilnehmer, insbesondere im Controller, sind beliebige Werte möglich. Wird R aus einem Register gezogen, bietet sich ein Startwert von 0 an, da dieser durch einen Reset, insbesondere einen Power-On-Reset leicht im Register erzielbar ist und keine weitere Einstellung nötig ist. Einzige Voraussetzung bezüglich der Werte E und A ist, dass E >= A, also der Zähler des Teilerverhältnisses TUR größer dem Nenner ist, was bedeutet, dass aus einem schnelleren Eingangstakt ein langsamerer Ausgangstakt gebildet wird. Ansonsten sind E und A frei wählbar.

Bei einer besonderen Ausführungsform wird das erfindungsgemäße Verfahren dahingehend weitergeführt, dass eine Unterteilung der Taktimpulse des Ausgangstaktes AT erzielt wird. Die Anzahl der Taktimpulse des Eingangstaktes E und die Anzahl der Taktimpulse des Ausgangstaktes A sind wiederum ganze Zahlen, allerdings diesmal mit einem Teilerverhältnis

$$TUR = E/A >= 2 \qquad\qquad \text{(Gleichung 10)}$$

und F als ganze Zahl mit F <= dem Teilerverhältnis TUR (F<=TUR). Neben dem Zwischenwert R wird ein weiterer Zwischenwert, ein Teilzwischenwert T eingeführt, der wie R eine ganze Zahl ist und in diesem Beispiel ebenfalls mit 0 startet.

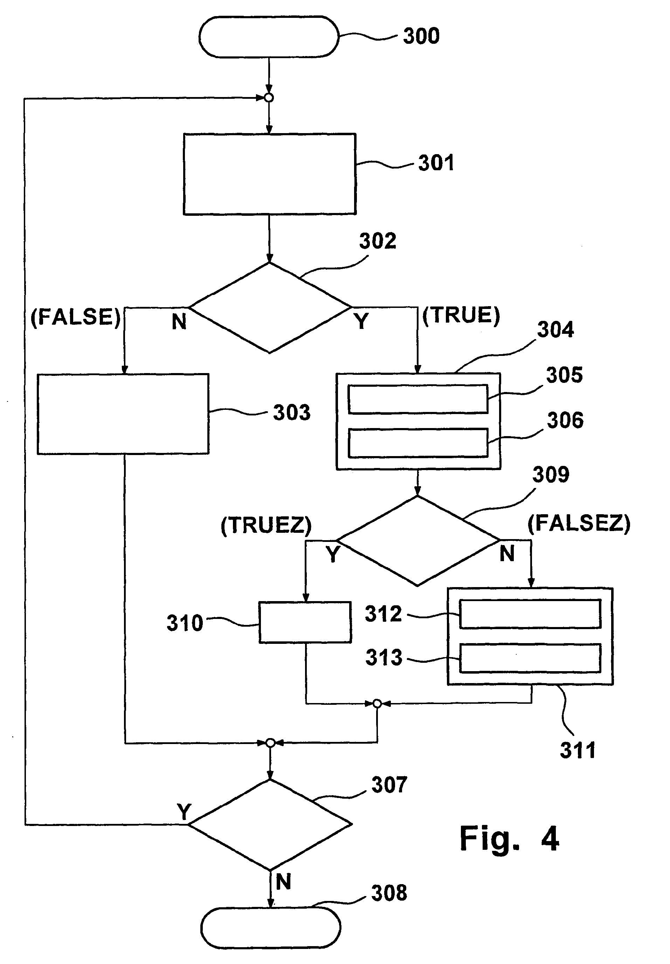

In Figur 4 ist die erfindungsgemäße Weiterführung des Verfahrens dargestellt. Der Verfahrensstart erfolgt im Block 300. Im Block 301 werden vergleichbar, wie in Figur 2, die Taktimpulse des Eingangstaktes ET ausgewertet, wobei zu jedem Eingangstaktimpuls der nachfolgende Prozess abläuft. In Abfrage 302 wird geprüft, ob

$$R > E - A * F \qquad \text{(Gleichung 11)}$$

ist. Ist dies nicht erfüllt, ergibt sich also ein Wahrheitswert FALSE, gelangt man zu Block 303, wo wiederum R angepasst wird, und zwar gemäß

$$R := R + A * F \qquad \text{(Gleichung 12)}.$$

Ist die Bedingung nach Gleichung 11 in Block 302 allerdings erfüllt, ergibt sich also ein Wahrheitswert TRUE, gelangt man zu Block 304. Darin wird nun einerseits in Block 305 der Zwischenwert R angepasst gemäß:

$$R := R + A * F - E \qquad \text{(Gleichung 13)}.$$

Gleichzeitig oder, wie später in einer Variante noch zu beschreiben, versetzt dazu wird nun in Block 306 ein Teiltaktimpuls, also ein Taktimpuls eines Teiltaktes TT erzeugt, vergleichbar mit dem Taktimpuls des Ausgangstaktes AT aus dem vorherigen Beispiel. Bis hier entspricht die Weiterführung somit dem vorgenannten Beispiel, wobei im vorher genannten Beispiel F = 1 gewählt war. Nun wird allerdings in Block 309 der Teilzwischenwert T überprüft, und zwar nach der Bedingung

$$T < F \qquad \text{(Gleichung 14)}.$$

Entsprechend dieser Bedingung ergibt sich nun ein zusätzlicher Wahrheitswert TRUEZ oder FALSEZ. Ist die Bedingung T < F erfüllt, ergibt sich der Wahrheitswert TRUEZ und man gelangt zu Block 310, wo T inkrementiert wird, also

$$T: = T + 1 \qquad \text{(Gleichung 15)}.$$

Ist die Bedingung T < F in Block 309 gemäß Gleichung 14 nicht erfüllt, ergibt sich also ein Wahrheitswerte FALSEZ, gelangt man zu Block 311. Hier wird nun zum Einen in Block 312 der Teilzwischenwert T rückgesetzt, also

$$T: = 0 \qquad \text{(Gleichung 16)}$$

und zum Anderen in Block 313 ein Taktimpuls eines dritten Taktes des Ausgangsteiltaktes ATT erzeugt. Dies kann nun, wie in Block 304 oder auch im vorhergehenden Beispiel im Wesentlichen gleichzeitig erfolgen oder zeitlich versetzt.
Aus Block 303, 310 und 311 gelangt man nun zur Abfrage 307, wo lediglich geprüft wird, ob das Verfahren weiter aufrechterhalten werden soll bzw. aufrechtzuerhalten ist. Ist dies der Fall, gelangt man erneut zu Block 301, wo der nächste Taktimpuls des Eingangstaktes ausgewertet wird. Ist das Verfahren beendet, beispielsweise nach einer Zeitbedingung oder weil über einen vorgebbaren Zeitraum keine Taktimpulse des Eingangstaktes ET ermittelt wurden usw., gelangt man zu Block 308, dem Ende des Verfahrens. Auch hier ist die Abbruchbedingung optional.
Entsprechend dem eben beschriebenen Verfahren wird somit ein Teilimpuls des Teiltaktes TT, also des hier in diesem Ausführungsbeispiel zweiten Taktes, entsprechend Block 304 bzw. 306 erzeugt, und zwar für jeden Taktimpuls des Eingangstaktes ET, zu dem die Bedingung gemäß Gleichung 11 (R > E - A * F) erfüllt ist.
Gleichermaßen wird ein Taktimpuls eines Ausgangstaktes, hier der Taktimpuls des dritten Taktes, des Ausgangsteiltaktes ATT, gemäß Block 311, speziell 313 für jeden Taktimpuls des Teiltaktes TT erzeugt, zu dem der Teilzwischenwert T einen bestimmten Wert annimmt. Dieser Wert ist wähl- bzw. vorgebbar und kann beispielsweise 0 sein. D. h. der Taktimpuls des Ausgangsteiltaktes ATT wird für jeden Taktimpuls des Teiltaktes TT beispielsweise dann erzeugt, wenn T von F - 1 auf 0 wechselt.

In einer besonderen Ausführungsform kann F auf Werte von $2^n$ mit $n \in \mathbb{N}$ beschränkt werden, so dass die Multiplikation A * F durch eine Verschiebung von A um n Bit (nach links oder rechts, je nach Systemvoraussetzungen) ersetzt werden kann. Wieder gibt es auch hier äquivalente Algorithmen, wobei das allgemeinere Schema wie folgt beschrieben werden kann:

- Es gibt in der Anwendung einen Prozess, der bei jedem Taktimpuls des Eingangstaktes ET einmal abläuft. Dies wird im Beispiel im Block 301 ausgewertet.

- Dieser Prozess kann einen Taktimpuls für einen Teiltakt TT für die Unterteilungen und gegebenenfalls auch noch Taktimpulse für den vollen Ausgangstakt, hier als Ausgangsteiltakt ATT, erzeugen.

- Der Teiltakpuls TTP bzw. der Taktimpuls des Teiltaktes TT wird erzeugt, wenn der Vergleich einer Zwischenvariablen bzw. des Zwischenwertes R mit einem aus E und A, insbesondere auch in Hardware, einfach berechenbaren festen Wert C, einem bestimmten Wahrheitswert TRUE oder FALSE ergibt. Im Beispiel entsprechend der Abfrage 302 und Block 304.

- Falls ein Teiltaktpuls TTP, also ein Taktimpuls des Teiltaktes TT erzeugt wird, wird mit dem Zwischenwert R wiederum eine bestimmte Manipulation, hier eine dritte Manipulation M3 vorgenommen, beispielsweise wie vorher Addition und Subtraktion einer aus A und E berechenbaren Größe gemäß Block 305.

- Der Taktimpuls des Ausgangsteiltaktes ATT wird gegebenenfalls erzeugt, falls der Vergleich einer weiteren Zwischenvariable bzw. des Teilzwischenwertes T mit einem festen Teilwert TC einen zusätzlichen Wahrheitswert TRUEZ oder FALSEZ ergibt. Dabei kann der Teilzwischenwert T beispielsweise die Teiltaktpulse TTP, also die Taktimpulse des Teiltaktes TT zählen.

- Falls ein Taktimpuls des Ausgangsteiltaktes ATT generiert wird, wird mit T eine weitere, vorgebbare Manipulation M4 vorgenommen entsprechend Block 312.

- Falls kein Teiltaktpuls TTP, also kein Taktimpuls des Teiltaktes TT bzw. kein Taktimpuls des Ausgangsteiltaktes ATT erzeugt wird, wird mit R eine vorgebbare weitere Manipulation M5 gemäß Block 303 bzw. mit T eine weitere vorgebbare Manipulation M6 gemäß Block 310 vorgenommen.

In diesem Beispiel entspricht somit der Teiltakt dem im vorhergehenden Beispiel mit Ausgangstakt bezeichneten Takt, was in beiden Fällen dem zweiten Takt entspricht, wenn der Eingangstakt ET als erster Takt angenommen wird. Zusätzlich ergibt sich also hier die Möglichkeit, einen weiteren dritten Takt basierend auf dem zweiten Takt, also dem Teiltakt, zu erzeugen, und zwar den Ausgangsteiltakt ATT.

Wie im vorgenannten Beispiel sind auch hier die entsprechenden Varianten möglich, wie dies bereits zu Figur 2 beschrieben wurde. Dies bedeutet also auch hier, dass die Taktausgabe entweder des Teiltaktes oder des Ausgangsteiltaktes und die Veränderung des Zwischenwertes R bzw. Teilzwischenwertes T einerseits im Wesentlichen zeitgleich öder zum Anderen versetzt geschehen kann, insbesondere versetzt, um Taktimpulse des ersten Taktes des Eingangstaktes ET. Gleiches gilt für die weitere Variante, dass der Teiltakt oder der Ausgangsteiltakt immer erzeugt werden und lediglich der Unterschied bezüglich R oder T zusätzlich eingestellt wird.

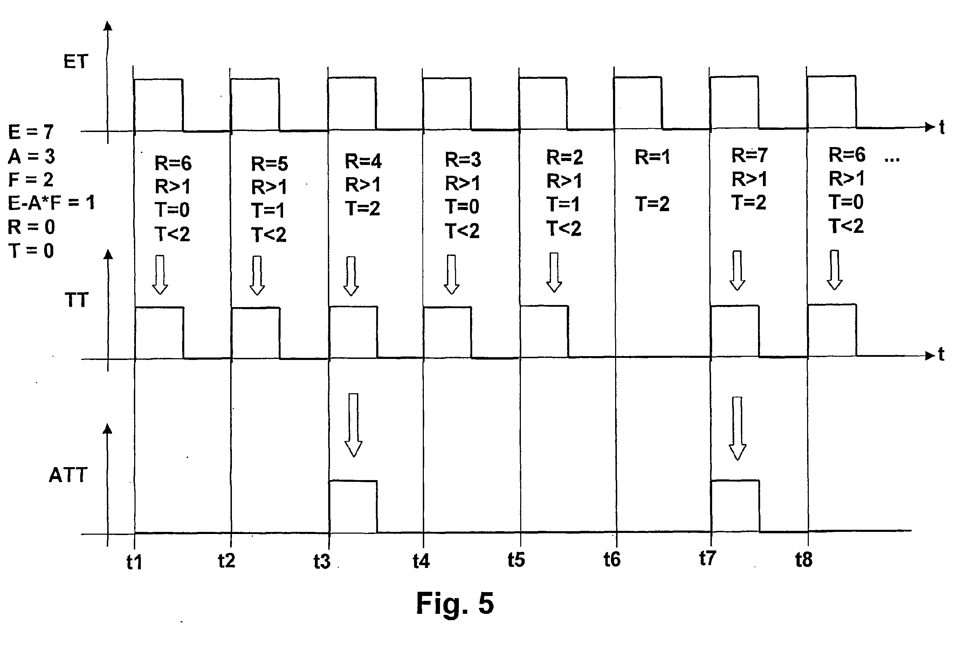

Die Weiterführung gemäß Figur 4 wird nun nochmals in Figur 5 in einem konkreten Beispiel näher erläutert. Anzahl der Eingangstakte E ist wieder 7, und Anzahl der Ausgangstakte A wieder 3, wobei F = 2 gewählt wird. Damit ergibt sich E - A * F = 1. R und T starten in diesem Beispiel mit 0. Dies hat wieder den Vorteil, dass die Werte in Speichern oder Registern eingeschrieben werden können und bei einem Reset, insbesondere einem Power-On-Reset also insbesondere nach einer Spannungsunterbrechung, die Startwerte von R und T vorliegen. Im ersten Eingangstaktimpuls startet R mit 0, so gelangt man zu Block 303 und gemäß Gleichung 12 wird für den nächsten Taktimpuls R = 6 festgelegt. Beim nächsten Durchlauf, beim nächsten Taktimpuls, ist somit R = 6, also größer 1. Man gelangt in Block 304, wo ein Teiltaktimpuls erzeugt wird. Gleichzeitig ist T weiterhin 0, und man gelangt zu Block 310, wo T inkrementiert wird.

Beim nächsten Eingangstaktimpuls bei t2 ist somit R = 5 > 1. Man gelangt wiederum zum Block 304, wo R neu berechnet wird zu R = 4, ein Teiltaktimpuls TT erzeugt wird und da T immer noch kleiner 2 ist, wird dieser Wert T in Block 310 erneut inkrementiert.

Bei t3, dem nächsten Eingangstaktimpuls, ist somit R = 4 immer noch größer 1, und man gelangt zum Block 304. Damit wird der nächste Wert für R berechnet, R = 3, und ein Teiltaktimpuls TT erzeugt. Block 309 liefert nun den Wahrheitswert FALSEZ, da T = 2 ist, was bedeutet, dass T auf 0 gesetzt wird im Block 312 und ein Ausgangsteiltaktimpuls ATT im Block 313 erzeugt wird. Zu t4 ist R mit 3 immer noch größer 1. Es wird also im Block 304 erneut ein Teiltaktimpuls TTP erzeugt und der nächste R-Wert zu R = 2 berechnet.

In Abfrage 309 ist T mit 0 < 2 und wird im Block 310 inkrementiert zu T = 1.

Zum Zeitpunkt t5 beim nächsten Eingangstaktimpuls ist somit R = 2 > 1. Es wird also ein Teiltaktimpuls im Block 304 erzeugt und der nächste Wert R = 1 berechnet. Im Block 309 wird T = 1 < 2 der Wahrheits TRUEZ ermittelt und man gelangt zu Block 310, wo T mit 1 < 2 zu 2 inkrementiert wird.

Bei t6 ist R = 1. Somit ergibt sich mit der Abfrage 302 der Wahrheitswert FALSE und R wird in Block 303 gemäß Gleichung 12 zu 7 berechnet.

Beim nächsten Eingangstaktimpuls bei t7 ist R = 7 > 1. Es wird somit im Block 304 ein Teiltaktimpuls erzeugt und gleichzeitig R zu 6 berechnet. Im Block 309 ergibt sich mit T = 2 der Wahrheitswert FALSEZ und man gelangt zu Block 311. Hier wird im Block 312 nun T erneut auf 0 gesetzt und im Block 313 ein Ausgangsteiltaktimpuls ATT erzeugt.

Bei t8 sind dann wieder die Werte zum Zeitpunkt t1 erreicht, und der Ablauf wiederholt sich und beginnt von Neuem.

Damit ist ein einfaches Verfahren gezeigt sowie eine Vorrichtung, ein Bussystem und ein Teilnehmer des Bussystems dargestellt, in welchem das Verfahren ausführbar ist und zwar in Hardware oder in Software, um ein gebrochen rationales Teilerverhältnis auf einfache Weise zu realisieren.

Die Verwendung des erfindungsgemäßen Teilerverfahrens, beispielsweise in einem IC, lässt sich unter anderem einerseits über das Datenblatt des ICs zeigen (das Teilerverhältnis wird als Quotient zweier ganzer Zahlen eingestellt) und/oder andererseits durch Messung des Eingangs- und des Ausgangstaktes bzw. der von dem Ausgangstakt gesteuerten Funktionen des ICs. Dabei ist der Eingangstakt ET der erste Takt, von dem ausgegangen wird. Aus diesem wird ein zweiter Takt erzeugt, der im ersten Beispiel eben mit Ausgangstakt AT und im zweiten Beispiel mit Teiltakt TT bestimmt ist, wobei im dritten Beispiel ein weiterer Takt, der Ausgangsteiltakt ATT, als dritter Takt zusätzlich oder anstatt des zweiten Taktes, des Teiltaktes TT ausgegeben wird.

## Patentansprüche

1. Verfahren für ein Bussystem mit wenigstens einem Teilnehmer, zur Bildung von Taktimpulsen eines zweiten Taktes (AT, TT) aus Taktimpulsen eines vorgegebenen ersten Taktes (ET), wobei eine erste Anzahl (E) der Taktimpulse des ersten Taktes in einem vorgebbaren Zeitintervall ermittelt oder vorgegeben wird und eine zweite Anzahl (A) der Taktimpulse des zweiten Taktes in dem vorgebbaren Zeitintervall ermittelt oder vorgegeben wird, **dadurch gekennzeichnet, dass** ein Zwischenwert (R) der Anzahl von Taktimpulsen in dem vorgebbaren Zeitintervall vorgegeben wird und der Zwischenwert (R) mit einem Wert (C) verglichen wird, welcher aus der ersten Anzahl (E) von Taktimpulsen und der zweiten Anzahl (A) von Taktimpulsen gebildet wird und sich aus dem Vergleich ein Wahrheitswert (TRUE, FALSE) ergibt, wobei abhängig von dem Wahrheitswert (TRUE, FALSE) ein Taktimpuls des zweiten Taktes (AT, TT) erzeugt wird, wobei neben dem Zwischenwert (R) ein Teilzwischenwert (T) vorgegeben wird, der mit einem vorgebbaren Teilwert (TC) verglichen wird und sich aus dem Vergleich mit dem Teilwert (TC) ein zusätzlicher Wahrheitswert (TRUEZ, FALSEZ) ergibt, wobei aus dem Taktimpuls des zweiten Taktes (AT, TT) abhängig von dem zusätzlichen Wahrheitswert (TRUEZ, FALSEZ) ein Taktimpuls eines dritten Taktes (ATT) erzeugt wird.

2. Verfahren nach Anspruch 1, **dadurch gekennzeichnet, dass** die Verfahrensschritte nach Anspruch 1 abhängig von jedem Taktimpuls des ersten Taktes einmal ablaufen.

3. Verfahren nach Anspruch 1, **dadurch gekennzeichnet, dass** der Zwischenwert (R) abhängig von dem Vergleich und damit abhängig vom Wahrheitswert (TRUE, FALSE) unterschiedlich verändert wird.

4. Verfahren nach Anspruch 3, **dadurch gekennzeichnet, dass** die Erzeugung des Taktimpulses des zweiten Taktes (AT, TT) und die Veränderung des Zwischenwertes (R) um eine vorgebbare Anzahl an Taktimpulsen des ersten Taktes (ET) versetzt durchgeführt wird.

5. Verfahren nach Anspruch 1, **dadurch gekennzeichnet, dass** sich der Wert (C) mit dem der Zwischenwert (R) verglichen wird aus dem Zusammenhang

$$C = E - A * F$$

ergibt, wobei F eine ganze Zahl ist.

6. Verfahren nach Anspruch 1, **dadurch gekennzeichnet, dass** ein Taktimpuls des zweiten Taktes (AT, TT) zu jedem Taktimpuls des ersten Taktes (ET) dann erzeugt wird, wenn die Bedingung

$$R > E-A*F$$

erfüllt ist, wobei F eine ganze Zahl ist.

7. Verfahren nach Anspruch 5 oder 6, **dadurch gekennzeichnet, dass** die ganze Zahl F auf Werte von $2^n$ mit $n \in \angle$ beschränkt ist und die Multiplikation A*F durch eine Verschiebung des binären Wertes von A um n Bit ersetzt wird.

8. Verfahren nach Anspruch 1, **dadurch gekennzeichnet, dass** bei Erzeugung der Taktimpulse des dritten Taktes (ATT) die Taktimpulse des zweiten Taktes (AT, TT) nur im Teilnehmer zur Verfügung stehen aber von diesem nicht ausgegeben werden.

9. Verfahren nach Anspruch 1, **dadurch gekennzeichnet, dass** der Teilzwischenwert (T) abhängig von dem Vergleich mit dem Teilwert (TC) und damit abhängig vom zusätzlichen Wahrheitswert (TRUEZ, FALSEZ) unterschiedlich verändert wird.

10. Verfahren nach Anspruch 9, **dadurch gekennzeichnet, dass** die Erzeugung des Taktimpulses des dritten Taktes (ATT) und die Veränderung des Teilzwischenwertes (T) um eine vorgebbare Anzahl an Taktimpulsen des ersten Taktes (ET) oder des zweiten Taktes (AT, TT) versetzt durchgeführt wird.

11. Vorrichtung für ein Bussystem mit wenigstens einem Teilnehmer, zur Bildung von Taktimpulsen eines zweiten Taktes (AT, TT) aus Taktimpulsen eines vorgegebenen ersten Taktes (ET), wobei erste Mittel enthalten sind, die eine erste Anzahl (E) der Taktimpulse des ersten Taktes in einem vorgebbaren Zeitintervall ermitteln oder vorgeben und zweite Mittel enthalten sind, die eine zweite Anzahl (A) der Taktimpulse des zweiten Taktes in dem vorgebbaren Zeitintervall ermitteln oder vorgeben, **dadurch gekennzeichnet, dass** dritte Mittel enthalten sind, die einen Zwischenwert (R) der Anzahl von Taktimpulsen in dem vorgebbaren Zeitintervall vorgeben und vierte Mittel enthalten sind, die den Zwischenwert (R) mit einem Wert (C) vergleichen, welcher aus der ersten Anzahl (E) von Taktimpulsen und der zweiten Anzahl (A) von Taktimpulsen gebildet wird und sich aus dem Vergleich ein Wahrheitswert (TRUE, FALSE) ergibt, wobei fünfte Mittel enthalten sind, die abhängig von dem Wahrheitswert (TRUE, FALSE) einen Taktimpuls des zweiten Taktes (AT, TT) erzeugen, wobei neben dem Zwischenwert (R) ein Teilzwischenwert (T) vorgegeben wird, der mit einem vorgebbaren Teilwert (TC) verglichen wird und sich aus dem Vergleich mit dem Teilwert (TC) ein zusätzlicher Wahrheitswert (TRUEZ, FALSEZ) ergibt, wobei aus dem Taktimpuls des zweiten Taktes (AT, TT) abhängig von dem zusätzlichen Wahrheitswert (TRUEZ, FALSEZ) ein Taktimpuls eines dritten Taktes (ATT) erzeugt wird.

12. Teilnehmer mit einer Vorrichtung nach Anspruch 11.

13. Bussystem mit einer Vorrichtung mach Anspruch 11.

**Claims**

1. Method for a bus system having at least one user, for forming clock pulses of a second clock (AT, TT) from clock pulses of a predefined first clock (ET), wherein a first number (E) of the clock pulses of the first clock is determined or predefined in a predefinable time interval, and a second number (A) of the clock pulses of the second clock is determined or predefined in the predefinable time interval, **characterized in that** an intermediate value (R) of the number of clock pulses is predefined in the predefinable time interval, and the intermediate value (R) is compared with a value (C) which is formed from the first number (E) of clock pulses and the second number (A) of the clock pulses, and a truth value (TRUE, FALSE) results from the comparison, wherein a clock pulse of the second clock (AT, TT) is generated as a function of the truth value (TRUE, FALSE), wherein, in addition to the intermediate value (R), a partial intermediate value (T) is predefined which is compared with a predefinable partial value (TC), and an additional truth value (TRUEZ, FALSEZ) results from the comparison with the partial value (TC), wherein a clock pulse of a third clock (ATT) is generated from the clock pulse of the second clock (AT, TT) as a function of the additional truth value (TRUEZ, FALSEZ).

**2.** Method according to Claim 1, **characterized in that** the method steps according to Claim 1 take place as a function of each clock pulse of the first clock.

**3.** Method according to Claim 1, **characterized in that** the intermediate value (R) is changed differently as a function of the comparison and thus as a function of the truth value (TRUE, FALSE).

**4.** Method according to Claim 3, **characterized in that** the generation of the clock pulse of the second clock (AT, TT) and the change in the intermediate value (R) by a predefinable number of clock pulses of the first clock (ET) are carried out in a staggered fashion.

**5.** Method according to Claim 1, **characterized in that** the value (C) with which the intermediate value (R) is compared is obtained from the relationship

$$C = E-A*F$$

where F is an integer.

**6.** Method according to Claim 1, **characterized in that** a clock pulse of the second clock (AT, TT) is generated at each clock pulse of the first clock (ET) if the condition

$$R > E-A*F$$

, where F is an integer, is met.

**7.** Method according to Claim 5 or 6, **characterized in that** the integer F is restricted to values of $2^n$ where $n \in \angle$ and the multiplication A*F is replaced by shifting of the binary value of A by n bits.

**8.** Method according to Claim 1, **characterized in that** when the clock pulses of the third clock (ATT) are generated, the clock pulses of the second clock (AT, TT) are available only in the user but are not output by it.

**9.** Method according to Claim 1, **characterized in that** the partial intermediate value (T) is changed differently as a function of the comparison with the partial value TC) and thus as a function of the additional truth value (TRUEZ, FALSEZ).

**10.** Method according to Claim 9, **characterized in that** the generation of the clock pulse of the third clock (ATT) and the change in the partial intermediate value (T) by a predefinable number of clock pulses of the first clock (ET) or of the second clock (AT, TT) are carried out in a staggered fashion.

**11.** Device for a bus system having at least one user, for forming clock pulses of a second clock (AT, TT) from clock pulses of a predefined first clock (ET), containing first means which determine or predefine a first number (E) of the clock pulses of the first clock in a predefinable time interval, and containing second means which determine or predefine a second number (A) of clock pulses of the second clock in the predefinable time interval, **characterized in that** said device contains third means which predefine an intermediate value (R) of the number of clock pulses in the predefinable time interval, and said device contains fourth means which compare the intermediate value (R) with a value (C) which is formed from the first number (E) of clock pulses and the second number (A) of clock pulses, and a truth value (TRUE, FALSE) results from the comparison, wherein said device contains fifth means which generate a clock pulse of the second clock (AT, TT) as a function of the truth value (TRUE, FALSE), wherein, in addition to the intermediate value (R), a partial intermediate value (T) is predefined which is compared with a predefinable partial value (TC), and an additional truth value (TRUEZ, FALSEZ) results from the comparison with the partial value (TC), wherein a clock pulse of a third clock (ATT) is generated from the clock pulse of the second clock (AT, TT) as a function of the additional truth value (TRUEZ, FALSEZ) .

**12.** User having a device according to Claim 11,

**13.** Bus system having a device according to Claim 11.

**Revendications**

**1.** Procédé destiné à un système de bus comportant au moins un abonné, pour former des impulsions de cadence d'une seconde cadence (AT, TT) à partir d'impulsions de cadence d'une première cadence (ET) prédéfinie, selon lequel on détermine ou on prédéfinit un premier nombre (E) d'impulsions de cadence d'une première cadence dans un intervalle de temps prédéfini et on détermine ou on prédéfinit un second nombre (A) d'impulsions de cadence de la seconde cadence dans l'intervalle de temps prédéfini,
**caractérisé en ce qu'**
on prédéfinit une valeur intermédiaire (R) du nombre d'impulsions de cadence dans l'intervalle de temps prédéfini, et on compare la valeur intermédiaire (R) à une valeur (C) formée à partir du premier nombre (E) d'impulsions de cadence du second nombre (A) d'impulsions de cadence et à partir de la comparaison, on définit une valeur de vérité (VRAI, FAUX) et en fonction de la valeur de vérité (VRAI, FAUX), on génère une impulsion de cadence de la seconde cadence (AT, TT), et
à côté de la valeur intermédiaire (R), on prédéfinit une valeur partielle intermédiaire que l'on compare à une valeur partielle prédéfinie (TC) et à partir de la comparaison avec la valeur partielle (TC), on obtient une valeur de vérité supplémentaire (VRAIZ, FAUXZ) et à partir de l'impulsion de cadence de la seconde cadence (AT, TT), en fonction de la valeur de vérité supplémentaire (VRAIZ, FAUXZ), on génère une impulsion de cadence d'une troisième cadence (ATT).

**2.** Procédé selon la revendication 1,
**caractérisé en ce que**
les étapes de procédé selon la revendication 1 se déroulent en une seule fois en fonction de chaque impulsion de cadence de la première cadence.

**3.** Procédé selon la revendication 1,
**caractérisé en ce qu'**
on modifie différemment la valeur intermédiaire (R) en fonction de la comparaison et ainsi en fonction de la valeur de vérité (VRAI, FAUX).

**4.** Procédé selon la revendication 3,
**caractérisé en ce qu'**
on génère de manière décalée l'impulsion de cadence de la seconde cadence (AT, TT) et la variation de la valeur intermédiaire (R) d'un nombre prédéfini d'impulsions de cadence de la première cadence (ET).

**5.** Procédé selon la revendication 1,
**caractérisé en ce qu'**
on compare la valeur (C) à la valeur intermédiaire (R) obtenue par la relation :

$$C = E\text{-}A^*F$$

dans laquelle, F est un nombre entier.

**6.** Procédé selon la revendication 1,
**caractérisé en ce qu'**
on génère une impulsion de cadence de la seconde cadence (AT, TT) pour chaque impulsion de cadence de la première cadence (ET) si la condition suivante est satisfaite :

$$R > E\text{-}A^*F$$

dans laquelle, F est un nombre entier.

**7.** Procédé selon l'une quelconque des revendications 5 ou 6,
**caractérisé en ce que**
le nombre entier F est limité à des valeurs $2^n$ avec $n \in \angle$ et on remplace la multiplication A*F par un décalage de la valeur binaire de A suivant un décalage de n bits.

**8.** Procédé selon la revendication 1,
**caractérisé en ce qu'**
en générant les impulsions de cadence de la troisième cadence (ATT), on dispose des impulsions de cadence de la seconde cadence (AT, TT) seulement chez l'abonné mais ne sont pas émises par celui-ci.

**9.** Procédé selon la revendication 1,
**caractérisé en ce qu'**
on modifie différemment la valeur intermédiaire partielle (T) en fonction de la comparaison avec la valeur partielle (TC) et ainsi en fonction de la valeur de vérité supplémentaire (VRAIZ, FAUXZ).

**10.** Procédé selon la revendication 9,
**caractérisé en ce qu'**
on effectue de manière décalée la génération de l'impulsion de cadence de la troisième cadence (ATT) et la variation de la valeur intermédiaire partielle (T) d'un nombre prédéfini d'impulsions de cadence de la première cadence (ET) ou de la seconde cadence (AT, TT).

**11.** Dispositif pour un système de bus ayant au moins un abonné pour former les impulsions de cadence d'une seconde cadence (AT, TT) à partir d'impulsions de cadence d'une première cadence prédéfinie (ET), avec des premiers moyens qui déterminent ou prédéfinissent un premier nombre (E) d'impulsion de cadence de la première cadence dans un intervalle de temps prédéfini et des seconds moyens qui déterminent ou prédéfinissent un second nombre (A) d'impulsions de cadence de la seconde cadence dans un intervalle de temps prédéfini,
**caractérisé par**
des troisièmes moyens qui prédéfinissent une valeur intermédiaire (R) du nombre d'impulsions de cadence dans l'intervalle de temps prédéfini et des quatrièmes moyens qui comparent la valeur intermédiaire (R) à une valeur (C) formée à partir du premier nombre (E) d'impulsions de cadence et du second nombre (A) d'impulsions de cadence et qui résulte de la comparaison d'une valeur de vérité (VRAI, FAUX), des seconds moyens générant une impulsion de cadence de la seconde cadence (AT, TT) en fonction de la valeur de vérité (VRAI, FAUX) et à côté de la valeur intermédiaire (R), on prédéfinit une valeur intermédiaire partielle (T) que l'on compare à une valeur partielle prédéfinie (TC) et à partir de la comparaison avec la valeur partielle (TC), on obtient une valeur de vérité supplémentaire (VRAIZ, FAUXZ) et à partir de l'impulsion de cadence de la seconde cadence (AT, TT) et en fonction de la valeur de vérité supplémentaire (VRAIZ, FAUXZ), on génère une impulsion de cadence d'une troisième cadence (ATT) .

**12.** Abonné comportant un dispositif selon la revendication 11.

**13.** Système de bus comportant un dispositif selon la revendication 11.

Fig. 1

EP 1 374 035 B1

# Fig. 2

ET

E = 7
A = 3
E-A = 4
R = 0

R=3    R=6    R=2    R=5    R=1    R=4    R=7    R=3 ...
       R>4           R>4                  R>4

AT

t1    t2    t3    t4    t5    t6    t7    t8

## Fig. 3

EP 1 374 035 B1

300

301

302

(FALSE)  N  Y  (TRUE)

304

305

306

303

309

(TRUEZ)  Y  N  (FALSEZ)

310  312

313

311

307

Y

N

308

**Fig. 4**

**Fig. 5**

ET

E = 7
A = 3
F = 2
E-A*F = 1
R = 0
T = 0

R=6     R=5     R=4     R=3     R=2     R=1     R=7     R=6 ...
R>1     R>1     R>1     R>1     R>1             R>1     R>1
T=0     T=1     T=2     T=0     T=1     T=2     T=2     T=0
T<2     T<2             T<2     T<2                     T<2

TT

ATT

t1   t2   t3   t4   t5   t6   t7   t8

EP 1 374 035 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10000302 A1
- DE 10000303 A1
- DE 10000304 A1
- DE 10000305 A1
- US 5907590 A